# EUROPEAN PATENT APPLICATION

(11) **EP 1 702 506 A1**
(43) Date of publication of application: **20.09.2006**
(21) Application number: 05425139.2
(22) Date of filing: 11.03.2005
(51) Int. Cl.: A01G 9/02, A01G 27/04

(54) **Drainage set for plants grown in pots or boxes**

(71) Applicant: Mileto, Attilio, 28900 Verbania (VB) (IT)
(72) Inventor: Mileto, Attilio, 28900 Verbania (VB) (IT)
(74) Representative: Arena, Giovanni

(57) **Abstract**

Drainage set consisting of a bag designed to be placed at the bottom of a flowerpot or container for nursery-gardening uses, in order to occlude one or more drain holes. The bag is characterized by the combined presence of:
- a closed shell (A) made of geotextile fabric;
- a drainage material (B) in grains contained in said shell.

According to a preferred embodiment, the closed shell comprises a closed pocket containing material liable to water retention and water accumulation.

According to an additional preferred embodiment, the closed shell comprises a second pocket, containing fertilizing material.

## Description

The present invention concerns a drainage set (hereinafter also named drainage bag) used for growing plants in flowerpots (or containers or boxes).

### PRIOR ART

It is known that in order to luxuriantly grow a plant in a flowerpot, the potting mould must be well drained.

The methods normally used for ensuring drainage of the potting mould consist in placing a few potsherds over drain hole(s), located in the lower part of the container, and in covering them with a drainage layer, about 2 - 5 cm. thick, made up of stones or pebbles, perlite grains, vermiculite grains, evergreen oak leaves, etc.

The drainage layer is then covered with a baffle or filtering layer which consists of a nylon net, or glass wool gauze or any material able to delay the occlusion of the drainage layer and of the drain hole due to the potting substrate particles, which are carried downwards by the watering water and by gravitational force.

Finally, before positioning the plant, it is recommended to overlay a layer of organic fertilizer and a layer of potting mould mixed with sand so as to improve the performances of the underlying drainage layer.

Therefore, the composition and correct implementation of this virtual drainage "cocktail" may not be known or realized by any person.

As a matter of fact, the execution of these operations, the availability of such heterogeneous materials and their storage within people's homes, often represent difficult obstacles to overcome for people with fairly good or little manual skills, with little space or time availability or with limited interest in carrying out gardening tasks. On the other hand, many older people become interested in cultivating plants in pots but their limited motor skills do not allow them to access the supply channels of the various "ingredients" required for a proper preparation of the said drainage set.

Moreover, the implementation of the drainage complex requires particular skillfulness. As a matter of fact, when all required materials are found, it is necessary to prepare them and make them suitable for their specific purpose. The potsherds shall be broken according to the size of the drain hole; the anti-occlusion net shall be cut according to the size of the pot, thereby leaving it a bit wide so that it can run up the wall of the pot so as to keep the potting mould away from penetrating, thereby making the filtering function ineffective as well as the entire drainage system.

The implementation of the drainage complex is even more complicated when the plant, due to its increased size or to the clogging of drainage system or other reasons, must be repotted. In this case, it is necessary to separate the roots of the plant from the old drainage complex, which is always permeated and enveloped by the root system. Thus, the process is based on separating the roots one by one from the grains of the drainage complex or, as an alternative, it is possible to prune the roots; the latter operation should be carried out with great proficiency by making use of a sterilized knife, and being careful not to remove the apical parts whereby the plant absorbs water and nutrients.

### SCOPE OF THE INVENTION

The scope of this invention is to implement a drainage set which, with respect to the known solutions, includes at least one of the following primary advantages, i.e.:
- to eliminate the need to pursue the various elements of the drainage set, and to skillfully and proficiently proceed with its implementation;
- to facilitate, speed up and make potting operations more efficient and long-lasting;
- to substantially simplify repotting operations;
- to allow repeated use of the drainage complex with considerable ecological and economic savings possibilities and benefits; as a result of this, repeated repotting operations no longer entail repeated withdrawals of drainage material from pits or riverbeds and no repeated shipment to rubbish dump of the drainage complext that can no longer be reused.

### SUMMARY OF THE INVENTION

The drainage set for plants cultivated in flowerpots or boxes according to the present invention, in its strictly essential structural features, consists of a closed bag which is designed to be placed at the bottom of a flowerpot or container for nursery-gardening uses, in order to occlude one or more drain holes, inasmuch as the said bag is characterized by:
- a closed shell, made of geotextile fabric;
- drainage material, in grains, contained in said shell.

According to a preferred embodiment, the aforesaid closed shell comprises a closed pocket, containing material liable to water retention and water accumulation.

According to an additional preferred embodiment, the aforesaid closed shell comprises a second pocket containing fertilizing material.

### DRAWINGS

For a better understanding of the invention, there is now given a non-limitative description of some embodiments, with reference to the attached drawings, wherein show:
Figures 1A and 1B: perspective and sectional views of a first preferred embodiment of the invention;
Figure 1C: sectional view of a flowerpot with bag of Figures 1A and 1B properly inserted;
Figures 2A and 2B: perspective and sectional views of a second embodiment of the invention;

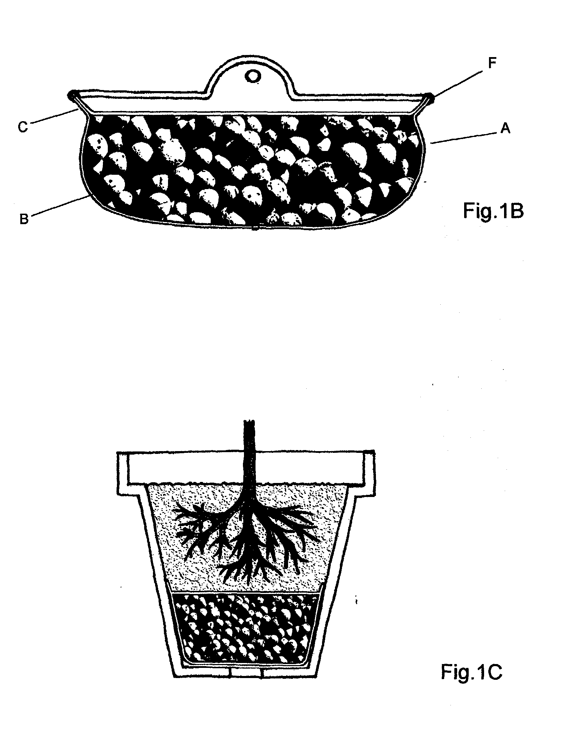

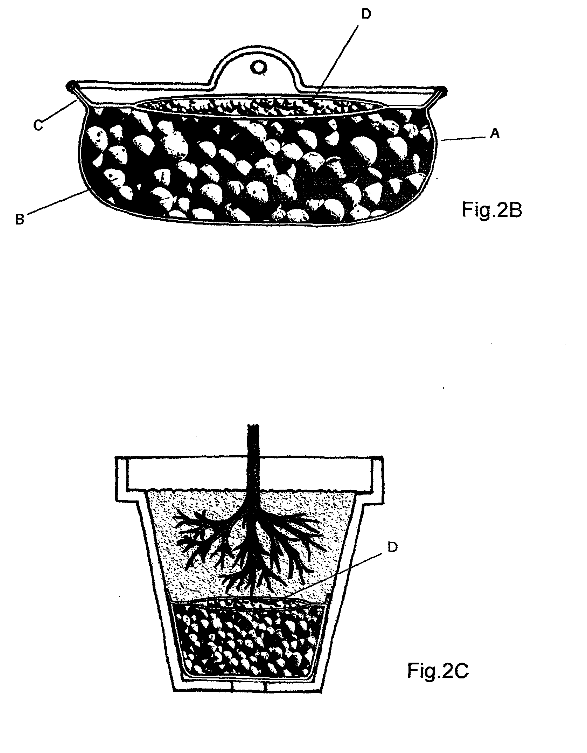

Figure 1C: sectional view of a flowerpot with bag of Figures 2A and 2B properly inserted;

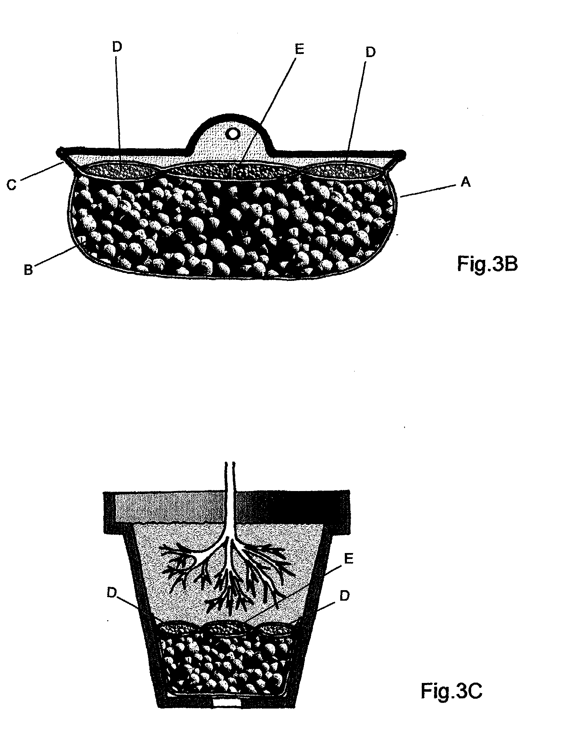

Figures 3A and 3B: perspective and sectional views of a third embodiment of the invention.

### PREFERRED EMBODIMENTS OF THE INVENTION

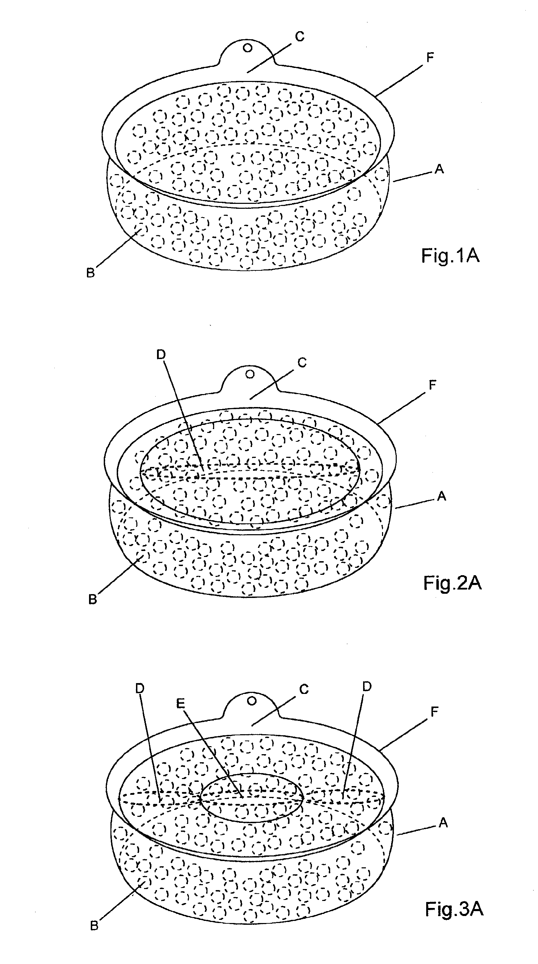

Figures 1A and 1B represent the perspective and sectional view of a first preferred embodiment of the invention, implementing it in its strictly essential features.

According to such examples, the drainage set consists of a closed bag, the shell A of which is made of geotextile fabric whereas the content B consists of drainage material, e.g. plastic beads, foamed clay, foam polystyrene, perlite, vermiculite, or sand, gravel, pebbles, potsherds, pumice stones, etc.

In a preferred version, the bag has a top perimeter stitching F, covered and protected by a colored plastic ribbon (ribbon not shown in the figures).

The geotextile fabric of the shell is available on the market with different names, e.g. Terram ®, Polyfelt®, Stabilenka®. Such material is permeable to liquids, imputrescible, non-toxic, resistant to chemical agents, bacteria-proof, fungus-proof, etc. The advantages resulting from its application as a drainage bag shell are particularly given, in addition to its water permeability and to its imputrescibility, both by the impenetrability of the potting mould used as a substrate by the hosted plant and by its root system.

The use of the above drainage bag includes the following advantages:
- Pursuing and storing all required materials to carry out the drainage of plants in flowerpots (sherds, perlite, pebbles, felt, etc.) is no longer of any use; the drainage bag collects all materials in order to achieve a good drainage of any type of plant cultivated in a flowerpot or in a box, regardless of the material the container is made from (clay, plastic, cement, metal, wood or otherwise);
- Repotting operations will be facilitated, faster, more efficient and long-lasting;
- It will no longer be necessary to know how to place the drainage material or how much of it you will need at the bottom of flowerpots or boxes, nor will it be necessary to know in which order. One bag will be enough for each pot (the size must be suitable for the container) or, in case of boxes and containers with several holes spaced apart, as many drainage bags as the cavities located at the bottom of the container thereof (in case of containers with several close holes, one bag may be enough);
- The drainage material, contained in the geotextile shell, will remain perfectly separated from the potting mould; in case it is reutilized, the potting mould will keep its correct granulometric composition, thereby preserving its optimum physical/chemical characteristics;
- Due to the geotextile characteristics of the bag, the root system of the plant cannot penetrate the drainage bag. The separation of the drainage bag from the potting mould block will therefore be easy, quick and safe, without jeopardizing the conditions of the root system; repotting operations will be easy to carry out.
- When repotting - in the plastic ribbon version - the coloured ribbon, which protects the perimeter stitching F of the drainage bag, will help localize the contact point between the drainage and the potting mould block, even if the root system has covered the inside of the pot. The special flap will make it possible to separate the drainage bag from the potting mould block and from the roots with a slight pull, without damaging the plant.
- The drainage bag can be reused several times, thereby allowing considerable saving possibilities related to:

- Economical aspects: each repotting operation carried out with traditional methods means repurchasing all the above mentioned material, inasmuch as it is extremely difficult to recover the grains after separating them from the roots; it is even more difficult when using perlite or vermiculite because their porous and rough surface adhere tenaciously to the root ends.
- Energy aspects: throwing artificial and unrecoverable material in the garbage is a waste of energy, inasmuch as the production of this material is possible only through industrial systems using large amounts of fuel (rotary furnaces). The need to repurchase it, thereby increasing the demand outside the construction field, forces the sector to produce excessive quantities compared to the actual needs.
- Ecological aspects: throwing gravel or natural pebbles in the garbage as well as material coming from pits or riverbeds is an ecological waste. Stone pits are bound to run out, riverbeds are plundered, thereby causing increasingly destructive floods. Preventing the share of material taken over by the nursery-gardening market, however reduced it may be, from worsening the ecological balance of the planet can be easily achieved by utilizing the drainage bag worldwide.

The cross section view in Figure 1C shows a pot with the drainage bag of Figures 1A and 1B properly inserted. The shell of the bag is, on the basis of the utmost pliability and flexibility of the geotextile fabric, perfectly adherent to the walls of the lower part of the pot with the flap C running along the pot wall to keep the potting mould from penetrating sideways along the wall.

Figures 2A and 2B are perspective and sectional views of a second preferred embodiment of the invention.

According to such example, the drainage bag consists, again, of a shell A made of geotextile fabric with content B being the drainage material. However, inside the shell A, the bag has, as an additional feature, an outlined circular pocket D (its section is shown by a dotted line in Figure 2A) containing material liable to water retention and water accumulation, e.g. natural clay grains, bentonite, peat, humus, etc.. This makes it possible to create a water stock inside the pot, thereby reducing the watering frequency of the plant.

The cross section view in Figure 2C shows a pot with the drainage bag of Figures 2A and 2B properly inserted.

Figures 3A and 3B are perspective and sectional views of a third preferred embodiment of the invention.

Compared to the second example, the drainage bag has, in addition to an annular-shaped pocket D (containing again water accumulation material), a second outlined circular pocket E containing a slow-release fertilizing product (organic or mineral); the section of the two pockets is shown by a dotted line in Figure 3A. The type of nutrient may change according to the specific use, e.g. a compatible-base fertilizer may be used for acidophilic plants.

In this case, the additional fertilizing effect, despite its limited duration (from three to six months), is particularly useful in the period following potting or repotting operations. This is normally the time when a plant needs a higher supplement of nutrients.

In the case of annual or fast-growing plants (thus plants needing frequent repotting), the nutritional requirement of the whole vegetative season (which corresponds to six - eight months) may be met by using a single drainage bag of the aforesaid type.

According to a preferred version of the bag in Figures 3A-3C, the fertilizing containment pocket E is provided with a Velcro opening/closing fastener, zipper or similar means. In this case, when carrying out repotting operations, the effectiveness of the nutritional action may be reintegrated by simply opening the fertilizing pocket and by replacing its content.

The cross section view in Figure 3C shows a pot with the drainage bag of Figures 3A and 3B properly inserted.

As previously indicated, the size of a drainage bag, according to the invention, must be suitable for the container. For example, considering a pot of the type shown in the figures, this means that in order to fulfil the requirements concerning truncated conical pots currently available on the market, it will be necessary to set up multi-diameter drainage bags (3 - 4 different sizes); each size is adaptable to pot sizes within a certain interval. For instance, a drainage bag with a 14 cm. diameter can be used in pots with an inside diameter of 12, 14 or 16 cm., a bag with a 20 cm diameter can be used in 18, 20, 22 cm. pots, and so on.

It is apparent that, in addition to the previously described illustrative and not limitative embodiments, it may be possible to add numerous modifications, adaptations, variations and replacements of elements with others functionally equivalent, without departing from the true spirit and scope of the invention as defined in the following claims.

## Claims

1. Drainage set for plants cultivated in pots or boxes consisting of a bag designed to be placed at the bottom of a pot or box, in order to occlude one or more drain holes, in which are present:
- a closed shell (A) made of geotextile fabric;
- a drainage material (B) in grains contained in said shell.

2. Set as per Claim 1 **characterized in that** the bag shell comprises a first closed pocket (D) containing material liable to water retention and water accumulation.

3. Set as per Claim 2 **characterized in that** the bag shell comprises a second pocket (E) containing fertilizing material.

4. Set as per Claim 1 **characterized in that** the drainage material consists of one or more of the following materials: plastic beads, foamed clay, foam polystyrene, perlite, vermiculite, sand, gravel, pebbles, potsherds, pumice stones.

5. Set as per Claim 2 **characterized in that** the material, liable to water retention and water accumulation, consists of natural clay grains, or bentonite, or peat, or humus.

6. Set as per Claim 3 **characterized in that** the fertilizing material is of the organic/mineral slow-release type.

7. Set as per Claim 1 **characterized in that** the bag shell upwards presents an annular layer (C) bearing an outer perimeter stitching, covered with a plastic ribbon.

8. Set as per Claim 3 **characterized in that** the second pocket may be opened and closed again by a zipper or Velcro fastener, or other similar fastener.
